# FASCICULE DE BREVET EUROPEEN

(11) **EP 0 332 256 B1**
(45) Date de publication et mention de la délivrance du brevet: **16.06.1993**
(21) Numéro de dépôt: 89200515.8
(22) Date de dépôt: 02.03.1989
(51) Int. Cl.: G06F 3/033, G06F 15/64

(54) **Système graphique video muni d'un curseur graphique**
Graphisches Videosystem mit einer graphischen Positionsmarke
Graphical video system with a graphical cursor

(30) Priorité: 08.03.1988 FR 8802941
(43) Date de publication de la demande: 13.09.1989
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Bonnet, Thierry Société Civile S.P.I.D., F-75007 Paris (FR); Mathieu, Yves Société Civile S.P.I.D., F-75007 Paris (FR)
(74) Mandataire: Landousy, Christian

(56) Documents cités:
- FR-A- 2 530 047
- GB-A- 1 387 407
- US-A- 4 646 076
- IBM TECHNICAL DISCLOSURE BULLETIN, vol. 21, no. 8, janvier 1979, page 3284, New York, US; W.F. BEAUSOLEIL et al.: "Object identification and local highlighting on displays"
- ELECTRONIQUE, no. 265, mars 1979, pages 47-49, Paris, FR: D. BRANELLEC: "Le traitement d'image en couleurs"

## Description

L'invention concerne un système graphique vidéo muni d'un curseur graphique et d'un comparateur qui compare les coordonnées X_{C}, Y_{C} de position du curseur graphique avec les coordonnées X_{D}, Y_{D} de chaque élément de chaque ligne, les éléments étant explorés selon un balayage par trames, le curseur graphique interagissant avec l'image délivrée par le système graphique vidéo.

Un système graphique vidéo de ce type est connu du document EP 0 229 986. Il décrit un système graphique qui stocke des données d'images et qui est muni d'un curseur à l'aide duquel il est possible d'insérer des données dans l'image. Pour cela le curseur sélectionne une zone de l'image où doit s'opérer cette transformation et le système détermine cette zone à partir des coordonnées fournies par le curseur.

L'objet de ce document est donc de combiner les informations issues de la voie curseur et de la voie de données d'image.

Ce dispositif ne permet donc pas de repérer dans une image des caractéristiques qui lui sont propres, chaque zone d'image n'ayant d'ailleurs pas de code d'identification.

Le problème technique posé est de pouvoir identifier des portions d'images à l'aide d'un curseur graphique dont le repère est positionné sur une zone désirée.

Dans la publication IBM Technical Disclosure Bulletin, vol.21, no.8, janvier 1979, page 3284, New York, US, W.F. Beausoleil et al.:"Object identification and local highlighting on displays", la possibilité de retourner un identificateur d'objet à l'application au lieu des coordonnées est mentionnée mais aucune réalisation n'y est décrite.

La solution à ce problème est que le système graphique vidéo comprend :
- une mémoire d'images qui au cours de chargements successifs stocke temporairement :
   a) des paramètres numériques régulièrement explorés décrivant des surfaces codées relatives à des images à deux dimensions,
   b) et un identificateur à N bits, propre à chaque surface codée de sorte que les N bits soient successivement chargés en mémoire d'images par tranches de N/P bits au cours de P chargements successifs, avec P supérieur à 1, chaque chargement étant suivi d'une lecture de la mémoire d'images pour visualiser l'image selon les trames successives du balayage par trames,
- et un contrôleur graphique qui reçoit les tranches de N/P bits à chaque trame de lecture et reconstitue l'identificateur à N bits d'une surface codée après P trames de lecture successives, le contrôleur comprenant un circuit d'identification muni du comparateur et d'une mémoire d'identification qui stocke l'identificateur en cumulant les tranches de N/P bits au rythme de la lecture lorsque le comparateur a détecté l'identité des coordonnées X_{C}, Y_{C} et des coordonnées X_{D}, Y_{D}, l'identificateur complet stocké étant utilisé par le contrôleur graphique vidéo pour identifier la surface codée concernée par cet identificateur.

Le système graphique selon l'invention utilise une mémoire d'images tampon qui est alternativement chargée à un rythme donné puis lue à un autre rythme. Il opère sur des images formées de surfaces codées qui peuvent rester identiques à elles-mêmes au cours de plusieurs opérations successives de chargement puis de lecture en mémoire avant d'être à leur tour renouvelées.

Préférentiellement les images constituées de surfaces codées sont des images de synthèse. De telles images sont par exemple celles décrites dans le document EP 0 215 510, dont le contenu est incorporé à la présente description à titre de référence, où les surfaces codées sont issues de polygones. Ceux-ci sont traités par l'algorithme de la mémoire de profondeur (Z-buffer en langue anglaise) pour visualiser en deux dimensions des images codées où n'apparaissent que les portions de polygones les plus rapprochées d'un point d'observation.

Sur une telle image à deux dimensions il est souhaitable de pouvoir repérer les portions des surfaces codées visualisées et de les retrouver dans la mémoire d'images qui stocke toutes les données propres aux surfaces codées.

Pour cela selon l'invention on adjoint, au codage descriptif de la topologie de chaque polygone, un identificateur qui est également stocké en mémoire d'image. Cet identificateur est un code de N bits qui est délivré par tranches avec les paramètres descriptifs des surfaces codées à chaque chargement en mémoire d'images :
. soit 1 bit d'identificateur durant P = N trames
. soit N/P bits d'identificateur durant P trames

Le contrôleur peut ainsi recevoir la totalité de l'identificateur à l'issue de P trames de lecture. Ceci permet de limiter la taille de la partie de la mémoire d'images qui stocke la partie de l'identificateur. Le polygone peut ainsi être identifié et exploité soit pour sa visualisation ou tout autre traitement, l'affichage d'un index par exemple.

La localisation de la surface codée s'opère en déplaçant un repère graphique sur la surface de l'écran d'un dispositif de visualisation à l'aide d'un boîtier muni d'une manette activée par l'utilisateur selon les techniques habituelles connues de l'homme du métier.

Le contrôleur graphique dispose ainsi des coordonnées X_{C},Y_{C} de la position du repère graphique. Il dispose également, à l'aide d'un compteur/incrémenteur, de la position X_{D}, Y_{D} d'un point courant se déplaçant sur chaque élément d'image de chaque ligne de balayage dont les données à afficher correspondantes sont dans la mémoire d'image. Lorsque ces coordonnées sont identiques, la position du repère est déterminée et l'identificateur peut alors être stocké dans la mémoire d'identification après le nombre prévu de trames puis traité par le contrôleur comme décrit précédemment. Le repère doit rester à l'intérieur de la même surface codée au cours du nombre prévu de trames pour que l'identification soit effectuée.

Le curseur graphique va permettre :
- d'identifier les positions du repère sur l'écran et de déterminer la surface codée sur laquelle il est positionné,
- de générer le repère lui-même,
- de déplacer le repère sur l'écran par l'utilisateur.

L'invention sera mieux comprise à l'aide des figures suivantes données à titre d'exemples non limitatifs qui représentent :
figure 1A : un système de visualisation d'images comprenant un système graphique vidéo selon l'invention.
figure 1B : une vue de la surface de l'écran de visualisation.
figures 2A, 2B : une représentation du mécanisme de codage de l'identificateur.
figure 3 : le circuit d'identification selon l'invention.
figures 4A, 4B, 4C, 4D : une représentation de l'acquisition d'un identificateur sur 4 trames successives de balayage.

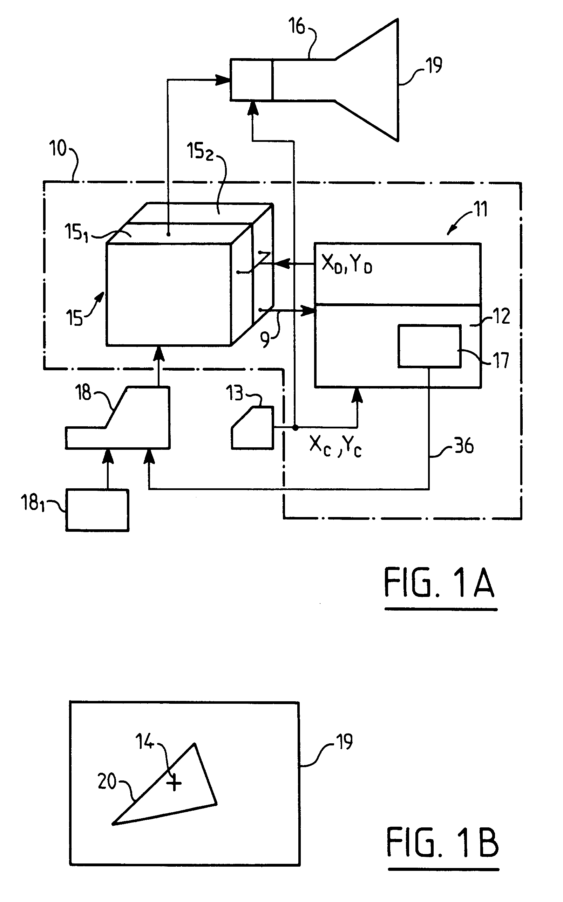

La figure 1A représente un système graphique vidéo 10 qui comprend un contrôleur graphique 11 muni d'un circuit d'identification 12. Celui-ci reçoit les coordonnées X_{C}, Y_{C} propres au repère du curseur graphique à l'aide d'un boîtier 13 activé par l'utilisateur. Ces coordonnées X_{C}, Y_{C} servent à afficher un repère 14 sur l'écran 19 d'un dispositif de visualisation 16. Le contrôleur graphique 11 détermine les coordonnées X_{D}, Y_{D} d'un point courant de l'écran 19 auquel correspond des données dans la mémoire d'images 15. Le dispositif de visualisation 16 opère en mode vidéo selon des lignes et des trames de balayage. Le calculateur 18 transmet à la mémoire d'image 15 à la fois les données à afficher sur l'écran (champ 15₁ de la mémoire), ainsi que la partie d'identificateur N/P bits (champ 15₂ de la mémoire). A chaque trame, la partie de l'identificateur est remplacée par la partie suivante. Les données à afficher sur l'écran sont déterminées selon l'algorithme mis en oeuvre pour la détermination de l'image, soit par le calculateur 18 lui-même, soit par un circuit spécialisé 18₁ lui-même géré par le calculateur 18. Ce circuit est par exemple celui décrit dans le document EP 0 215 510.

Lorsque le circuit d'identification 12 a détecté l'identité des coordonnées X_{C}, Y_{C} et des coordonnées X_{D}, Y_{D}, les parties successives de l'identificateur N/P sont stockées (connexion 9) dans une mémoire d'identification 17 au cours du nombre de trames prédéterminé. Lorsque l'ensemble des N bits de l'identificateur est reçu, celui-ci est alors transmis au calculateur 18 qui identifie la surface codée qui s'y rapporte. Le calculateur 18 transmet à la mémoire d'image 15 des informations permettant de représenter sur l'écran du dispositif de visualisation 16 les images formées de surfaces codées. L'affichage d'un index sur l'écran ou tout autre moyen permet d'attirer l'attention de l'utilisateur sur l'identification obtenue.

La figure 1B représente l'écran 19 du dispositif de visualisation 16 sur lequel est représenté une surface codée 20 et un repère graphique 14 associé au boîtier 13.

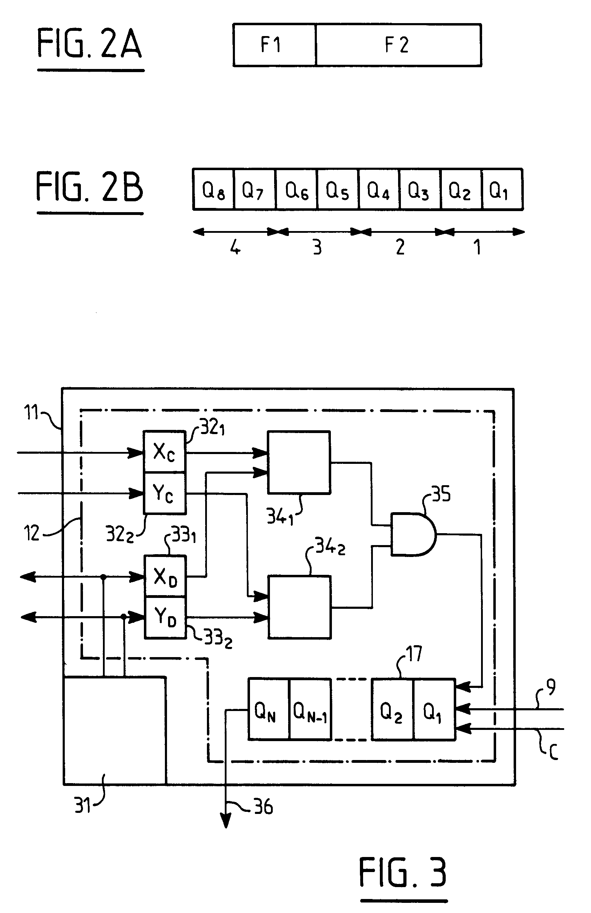

Les figures 2A et 2B représentent le mécanisme de codage de l'identificateur. Une surface codée va être caractérisée par le champ de données F2 sous la forme par exemple de sommets ou d'arêtes de polygones par exemple tel que décrit dans le document EP 0 215 510. Selon l'invention on associe à ce champ F2 un second champ F1 qui constitue un identificateur de cette surface codée. Un tel champ F1 peut être constitué de 1 ou plusieurs bits par exemple 8 bits selon la figure 2B. Ce champ F1 de N bits va pouvoir être détecté sur un nombre P de trames. Ainsi sur l'exemple avec N=8 bits il est possible d'effectuer 4 chargements en mémoire d'images puis de détecter sur quatre trames (P=4) quatre fois 2 bits d'identificateur. Selon la rapidité désirée pour effectuer cet échange il est possible de charger/détecter les 8 bits, bit après bit, sur 8 chargements/trames successifs, ou toute autre combinaison.

La figure 3 représente le circuit d'identification 12 qui permet de traiter l'identificateur. Le contrôleur graphique 11 comprend le circuit d'identification 12 et un compteur/incrémenteur 31. Celui-ci fournit les coordonnées X_{D}, Y_{D} d'un point courant de l'écran auquel correspond des données dans la mémoire d'image. Le circuit 12 reçoit également les coordonnées X_{C}, Y_{C} introduites par le boîtier manipulé par l'utilisateur. Ces coordonnées sont stockées dans des registres 32₁, 32₂, 33₁, 33₂. Les données X_{C} et X_{D} d'une part et Y_{C} et Y_{D} d'autre part sont comparées respectivement dans les comparateurs 34₁ et 34₂. Lorsqu'il y a identité deux à deux, la porte 35 délivre un signal qui valide l'introduction de la partie N/P bits (connexion 9) de l'identificateur I_{D} dans la mémoire d'identification 17. Le mécanisme est maintenu durant le nombre désiré P de trames par un signal de contrôle C issu du calculateur 18. Lorsque l'identificateur a été reçu en totalité il est transmis par la connexion 36 vers le calculateur 18 (figure 1A) qui affiche un index déterminé sur l'écran du dispositif de visualisation 16 ou prévient l'utilisateur que la surface codée a été identifiée.

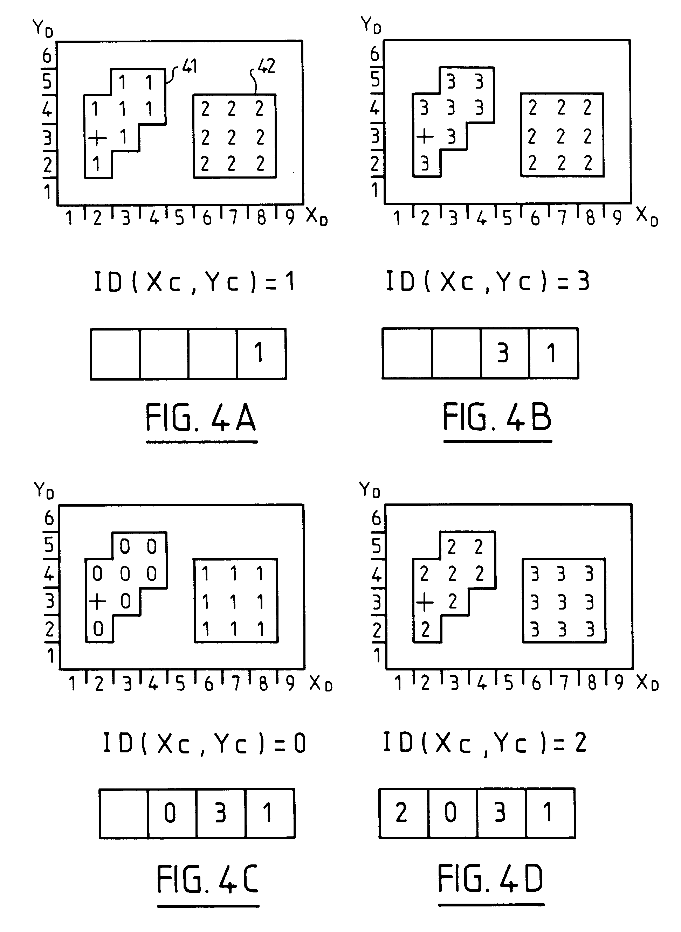

Les figures 4A, 4B, 4C, 4D représentent l'acquisition d'un identificateur sur 4 trames successives. Soient une surface codée 41 à identifier et une surface codée 42 qui ne fait pas l'objet d'une identification. Le curseur graphique est par exemple positionné en X_{C}=2 et Y_{C}=3. Lorsque le compteur/incrémenteur délivre les coordonnées X_{D}=2 et Y_{D}=3 il y a alors identité. Soit un identificateur codé sur 8 bits représenté sur les figures en notation décimale pour faciliter la représentation. A la première trame la mémoire d'identificateur acquiert le terme "1" de l'identificateur. Puis au cours des 2ème, 3ème et 4ème trame elle acquiert respectivement les termes "3" puis "0" puis "2" pour disposer à l'issue des 4 trames de l'identificateur complet "2031". L'identificateur de l'autre surface codée 42 a lui aussi évolué mais n'a pas donné lieu à identification.

L'identificateur "2031" est alors transmis au calculateur 18 par exemple pour permettre de rechercher dans la mémoire d'images 18 l'ensemble des données relatives à cette surface codée 41 afin d'opérer l'intervention désirée par l'utilisateur.

## Revendications

1. Système graphique vidéo (10) muni d'un curseur graphique et d'un comparateur (34₁; 34₂) qui compare les coordonnées X_{C}, Y_{C} de position du curseur graphique avec les coordonnées X_{D}, Y_{D} de chaque élément d'images de chaque ligne, les éléments d'images étant explorés selon un balayage par trames, le curseur graphique interagissant avec l'image délivrée par le système graphique vidéo, caractérisé en ce qu'il comprend :
- une mémoire d'images (15) qui au cours de chargements successifs stocke temporairement :
a) des paramètres numériques régulièrement explorés décrivant des surfaces codées, relatives à des images à deux dimensions,
b) et un identificateur à N bits, propre à chaque surface codée de sorte que les N bits soient successivement chargés en mémoire d'images par tranches de N/P bits au cours de P chargements successifs, avec P supérieur à 1, chaque chargement étant suivi d'une lecture de la mémoire d'images pour visualiser l'image selon les trames successives du balayage par trames,
- et un contrôleur graphique (11) qui reçoit les tranches de N/P bits à chaque trame de lecture et reconstitue l'identificateur à N bits d'une surface codée après P trames de lecture successives, le contrôleur comprenant un circuit d'identification (12) muni du comparateur (34) et d'une mémoire d'identification (17) qui stocke l'identificateur en cumulant les tranches de N/P bits au rythme de la lecture lorsque le comparateur a détecté l'identité des coordonnées X_{C}, Y_{C} et des coordonnées X_{D}, Y_{D}, l'identificateur complet stocké étant utilisé par le contrôleur graphique vidéo pour identifier la surface codée concernée par cet identificateur.

2. Système graphique vidéo selon la revendication 1, caractérisé en ce que la mémoire d'image et la mémoire d'identification stockent les N bits de l'identificateur en opérant bit après bit au cours respectivement de N chargements et de N trames de balayage.

3. Système graphique vidéo selon une des revendications 1 ou 2, caractérisé en ce que la mémoire d'identification est un registre à décalage.

## Claims

1. A video graphics system (10) equipped with a graphics cursor and a comparator (34₁, 34₂) which compares the positional co-ordinates X_{C}, Y_{C} of the graphics cursor with the co-ordinates X_{D}, Y_{D} of each image element of each line, the image elements being scanned frame-wise and with the image delivered by the video graphics system, characterized in that it comprises:
- an image memory (13) which, in the course of successive loadings, temporarily stores:
a) digital parameters which are regularly scanned and which describe encoded surfaces relating to two-dimensional images
b) and an N-bit identifier, specific to each encoded surface in such a manner that the N bits are successively loaded into memory in segments of N/P bits in the course of P successive loadings, P being greater than 1, each loading being followed by a reading of the image memory in order to display the image as successive frames of the scanning by frames
- and a graphics controller (11) which receives the segments of N/P bits during each read frame and reconstructs the N-bit identifier of an encoded surface after P successive read frames, the controller comprising an identification circuit (12) equipped with the comparator (34) and an identification memory (17) which stores the identifier while accumulating the segments of N/P bits in the rhythm of reading when the comparator has detected the identity of the co-ordinates | Xc, Yc | and of the co-ordinates | X_{D}, Y_{D} | , the complete identifier stored being used by the video graphics controller to identify the encoded surface whereto this identifier relates.

2. A video graphics system as claimed in Claim 1, characterized in that the image memory and the identification memory store the N bits of the identifier while operating, bit after bit, in the course of N loadings and N scanning frames, respectively.

3. A video graphics system as claimed in one of the Claims 1 or 2, characterized in that the identification memory is a shift register.

## Patentansprüche

1. Graphisches Videosystem (10) mit einer graphischen Positionsmarke und einem Komparator (34₁, 34₂), der die Positionskoordinaten X_{C}, Y_{C} der graphischen Positionsmarke mit den Koordinaten X_{D}, Y_{D} jedes Bildelements jeder Zeile vergleicht, wobei die Bildelemente einer Teilbildabtastung entsprechend abgetastet werden, und wobei eine Wechselwirkung zwischen der graphischen Positionsmarke und dem von dem graphischen Videosystem gelieferten Bild stattfindet, dadurch gekennzeichnet, daß es folgendes umfaßt:
- einen Bildspeicher (15), der im Laufe der aufeinanderfolgenden Ladevorgänge kurzzeitig folgendes speichert:
a) regelmäßig abgetastete digitale Parameter, die in bezug auf zweidimensionale Bilder codierte Flächen darstellen,
b) und einen N-Bit-Bezeichner für jede codierte Fläche, in der Weise, daß die N Bits bei P aufeinanderfolgenden Ladevorgängen, mit P größer als 1, nacheinander in Abschnitten von N/P Bits in den Bildspeicher geladen werden, wobei jedem Ladevorgang ein Auslesen des Bildspeichers folgt, um das Bild entsprechend den aufeinanderfolgenden Teilbildern der Teilbildabtastung visuell wiederzugeben,
- und eine graphische Steuereinheit (11), die bei jedem Leseteilbild die Abschnitte von N/P Bits empfängt und den N-Bit-Bezeichner einer codierten Fläche nach P aufeinanderfolgenden Leseteilbildern rekonstruiert, wobei die graphische Steuereinheit eine mit dem Komparator (34) und einem Identifikationsspeicher (17) versehene Identifikationsschaltung (12) enthält, und wobei der Identifikationsspeicher den Bezeichner speichert, indem er die Abschnitte von N/P-Bits im Lesetakt kumuliert, wenn der Komparator festgestellt hat, daß die Koordinaten X_{C}, Y_{C} und die Koordinaten X_{D}, Y_{D} identisch sind, und wobei der vollständige gespeicherte Bezeichner von der graphischen Videosteuereinheit benutzt wird, um die betreffende codierte Fläche durch diesen Bezeichner zu identifizieren.

2. Graphisches Videosystem nach Anspruch 1, dadurch gekennzeichnet, daß der Bildspeicher und der Identifikationsspeicher die N Bits des Bezeichners speichern, wobei sie bitweise während N Ladevorgängen bzw. N Abtastteilbildern arbeiten.

3. Graphisches Videosystem nach einem der Ansprüche 1 oder 2, dadurch gekennzeichnet, daß der Identifikationsspeicher ein Schieberegister ist.
